# EUROPEAN PATENT APPLICATION

(11) **EP 2 355 446 A2**
(43) Date of publication of application: **10.08.2011**
(21) Application number: 11153089.5
(22) Date of filing: 02.02.2011
(51) Int. Cl.: H04L 29/06

(54) **Accessing services in a communication network**

(30) Priority: 02.02.2010 EP 10152405
(71) Applicant: Swisscom AG, 3050 Bern (CH)
(72) Inventor: De Froment, Eric, 3072, Ostermundigen (CH)
(74) Representative: Scheuzger, Beat Otto

(57) **Abstract**

The present invention relates to a method for a content provider to deliver content in a communication network. The content provider first receives (201) a first content access request from the user. Then the content provider determines (203) which operator gateway it should contact and based on this determination the content provider informs (205) the operator gateway about the user's request. Then the content provider receives (209) a message from the operator gateway. This message contains at least a provisional session identifier. Consequently the content provider sends a redirection request to the user. The content provider receives (217) a second content access request containing profiling information, session identifier and a unique user identifier tied to the user. The content provider can then personalise (219) the content to the user's needs before the content provider delivers (229, 235) the content requested by the user.

## Description

### TECHNICAL FIELD

The present invention relates to a new method of accessing services in a communication network based on improvements in content delivery. In one embodiment the invention relates to improvements in content delivery networks. The invention likewise relates to a corresponding computer program product, to communication network elements and to a communication network.

### BACKGROUND OF THE INVENTION

A content delivery network or content distribution network (CDN) is a system of servers containing copies of data, placed at various points in a network so as to maximise bandwidth for access to the data from clients throughout the network. A client advantageously accesses a copy of the data near to the client, as opposed to all clients accessing the same central server, so as to avoid bottlenecks near that server. Content types include web objects, downloadable objects (media files, such as music and videos, software, documents), applications, real time media streams, etc.

CDN nodes are normally deployed in multiple locations, often over multiple backbones. These nodes are arranged to cooperate with each other to satisfy requests for content by end users, transparently moving content to optimise the delivery process. Optimisation may take the form of reducing bandwidth costs, improving end-user performance (e.g. reducing page load times), or increasing global availability of content.

One of the problems in CDNs, or in communication networks in general, relates to roaming customers and how to deal with roaming customers who would like to access services in their homeland. Currently many content providers (CP) use geoblocking to refuse certain access requests coming from outside of the homeland.

Geoblocking is a technology that is used to prevent access to web sites from visitors in certain countries or regions. Currently it is mainly used by traditional broadcast companies who are moving their television, radio and music content online. Because of distribution contracts with the producers of these programmes, many web sites limit access to people within their own country.

Whenever a person connects to the internet, their computer or mobile device is assigned a so-called internet protocol (IP) address. This is a sequence of numbers. The IP address is assigned to a network user by an internet service provider (ISP). Therefore, it is possible to say that a particular IP address is from a particular country or even city. Site owners that want to use geoblocking choose to only allow access to a particular range of IP addresses or to block certain ranges.

It is, however, possible to use IP address spoofing to gain access to information content that is normally restricted to users in certain geographical areas. In computer networking, the term IP address spoofing refers to the creation of IP packets with a forged (spoofed) source IP address with the purpose of concealing the identity of the sender.

The principles of geoblocking can be equally applied to subnetworks with restricted access, such as company networks, also known as intranets.

The problem with known geoblocking solutions is that some roaming customers who are travelling cannot gain access to all or some of the network services that are normally accessible when in their homeland network. IP address spoofing is not considered to be a solution to this problem. First, it is generally not considered acceptable to falsify one's IP address, and second, most of the network users are simply not capable of doing IP spoofing since it requires expert skills. Moreover, some restricted services require proper user authentication, and in this case the IP address spoofing itself does not solve the problem of reliably accessing these services.

Another problem relates to the distribution of the data in the CDNs. For instance, how should the data be distributed between network operators and CPs. Also currently the network operators and the CPs do not cooperate in an optimal way.

Also in current solutions, the user experience is not always optimal when accessing data in the communication networks. For instance, streaming data on end user devices with limited capabilities does not always show in an optimal way on the screen of the device.

It is the aim of the present invention to provide an improved solution for accessing content in a communication network.

### SUMMARY OF THE INVENTION

According to a first aspect of the invention, a method is provided for a content provider to deliver content in a communication network as recited in claim 1.

In one embodiment the content provider has at least a first server and a second server. The present invention provides a reliable way for a user to access the content in the content provider's network even if the user does not know exactly in which server the actual content is located. In the case where the user first contacts the first server, then in one aspect the CDN determines where the content is located and sends a redirection request to the user. The proposed method does not require any complicated procedures from the end user. Furthermore, only one gateway is needed for several CPs.

The gateway or the content provider in the CDN can also adapt the requested content to the user's needs. This has the advantage of greatly improving the user experience as the content is personalised to the user. Furthermore, the transmission parameters can also be adapted, either by the gateway or by the content provider.

Also even if the initial content request is sent on a cellular network channel, the actual data downloading or streaming can be done on an IP channel which is not a cellular network channel. In this case users need to pay for local internet access only, which in many cases is a flat fee, for service access. Furthermore, the users get a higher speed in the connection, compared with solutions where content or services are accessed through a cellular network.

The present invention is also advantageous for roaming customers, namely when roaming, the users have the same experience when accessing different services as in their homeland, corporate network or operator network by using an appropriate access method. The proposed method also provides facilitated access to user dedicated services. The teachings of the present invention can likewise be applied to virtual private networks (VPNs) to access services in private networks.

Before the user can access the content, the user is advantageously authenticated by using the cellular network channel. Thus, network operators can also benefit from the present invention, namely the proposed solution entails only very few interoperability costs because: (1) there is a strong authentication on a proven technology, such as the global system for mobile communications (GSM); and (2) techniques to access the services are open (hypertext transfer protocol (HTTP) token, VPN (requiring operator intervention), Mobile IP (requiring operator intervention), internet protocol security (IPsec), hypertext transfer protocol secure / secure sockets layer (HTTPS/SSL), hypertext transfer protocol secure / transport layer security (HTTPS/TLS), HTTP digest, direct access with a cookie, etc.). Operators are also in a better position to offer a stronger and flexible authentication method. As the users are still in the operator's control while abroad, aggregated services can be offered:
- Operator services: direct Login→ direct access to the user home page, voice over IP (VoIP), video services, etc.;
- Company restricted access; and
- Country and/or regional access.

Furthermore, payment is facilitated as any service can be billed using GSM/Mobile service (if GSM is the cellular network). The proposed method also allows users to access content (i.e. services), such as video stream, voice, video calls, etc., with the appropriate authentication methods, and when necessary with appropriate content protection methods. Meanwhile the user is benefiting from higher bandwidth available in the area (area where the user is located), as the content is not necessarily accessed via a cellular network.

According to a second aspect of the invention, a computer program product is provided for implementing the steps of a method according to the first aspect of the present invention when loaded and run on computer means of the content provider.

According to a third aspect of the invention, a server system is provided as recited in claim 16.

According to a fourth aspect of the invention, a communication network is provided as recited in claim 17.

Other aspects of the invention are recited in the dependent claims attached hereto.

### BRIEF DESCRIPTION OF THE DRAWINGS

Other features and advantages of the invention will become apparent from the following description of non-limiting exemplary embodiments, with reference to the appended drawings, in which:
- Figure 1 is a simplified network block diagram showing the communication system where the teachings of the present invention can be applied in accordance with a first embodiment of the present invention;
- Figures 2a and 2b are a flow chart illustrating the data access method in accordance with the first embodiment of the present invention;
- Figure 3 is a flow chart illustrating the authentication method in accordance with one example of the present invention;
- Figure 4 is a simplified network block diagram showing the communication system where the teachings of the present invention can be applied in accordance with a second embodiment of the present invention; and
- Figures 5a and 5b are a flow chart illustrating the data access method in accordance with the second embodiment of the present invention.

### DETAILED DESCRIPTION OF EMBODIMENTS OF THE INVENTION

Some embodiments of the present invention will be described in the following in more detail with reference to the attached figures.

The invention discloses a solution for an end user device to access content in a communication network, such as a CDN. One aspect of the invention is about the use of a mobile access (cellular network) for accessing restricted internet/intranet services by other communication means such as wireless fidelity (WiFi) or fixed line. Those services are granted by the homeland mobile operator. The purpose of this aspect of the invention is to enable roaming users to access the same type of service(s) as if they were located in their homeland, in a restricted zone such as a company, or at home.

Thus, one aspect of the present invention allows a seamless authentication for the user to access a service for which access is restricted. For instance, the following situations become possible:
- A user whose homeland is H, wanting to access content from that same homeland H while travelling abroad, will not be geoblocked anymore because of content rights issues;
- A user can directly/smoothly access his/her company services; and
- A user can directly/smoothly access operator premium content.

According to this aspect, once a user's computer is internet IP connected (e.g. WiFi hotspot), this invention enables the user to access any services granted by his/her mobile operator by using a cellular network (such as GSM) authentication channel prior to the service authorisation. This authorisation will be executed and delivered for the access to the internet/intranet IP operator services. The cellular network channel is considered to be secure enough to communicate some sensitive authentication information.

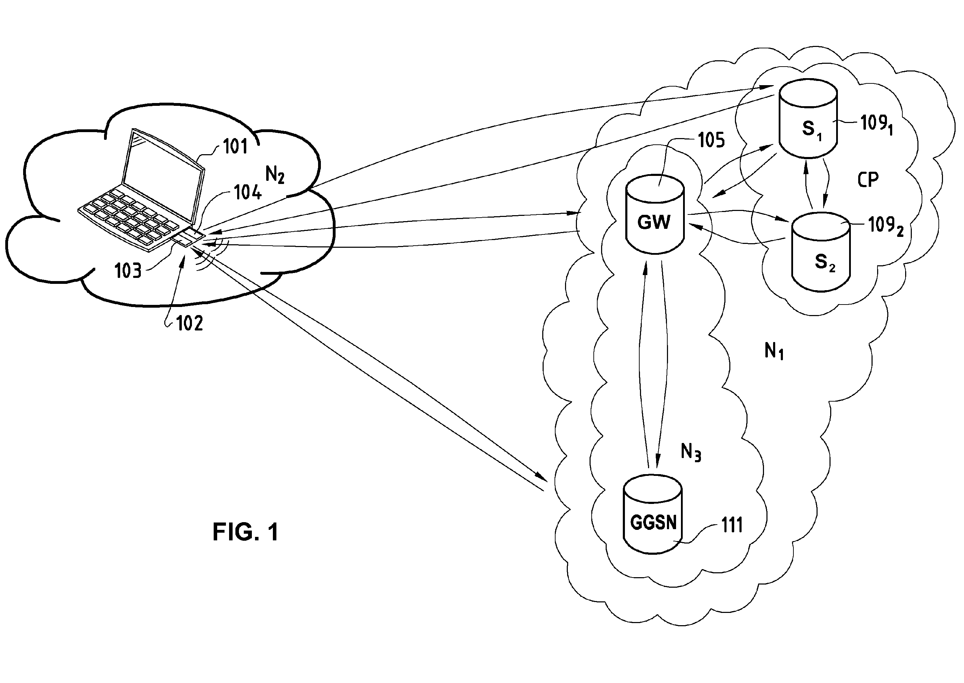

Figure 1 shows a simplified communication system block diagram according to the first embodiment of the present invention. Three different networks are referred to by N₁ (first network), N₂ (second network) and N₃ (third network). Here N₁ refers to the homeland network, N₂ refers to the visited network, where the user of the communication device or network access device 101, in this example a laptop computer, is currently roaming, and N₃ refers to an operator cellular communication network. In this example the first and second networks are characterised by their specific IP addresses. For instance, the first network N₁ is a homeland IP network, whereas the second network N₂ represents an IP network of another country. The third network N₃ can be considered to be a subnetwork of the first network N₁.

The laptop computer 101 is equipped with a specific hardware module 102, in this example a hardware card that can be removably connected to the laptop. On the laptop 101 there is provided a specific slot to accommodate the hardware card 102. The hardware card 102 contains a cellular access module (interface) 103 as well as an internet access module (interface) 104 and a software together with its driver, so that the software is arranged to centrally control the operation of these modules. The laptop 101 is arranged to access the internet wirelessly by using the internet access module 104, and the cellular network by using the cellular access module 103. Therefore, the card 102 is a dual WiFi/cellular network card with embedded software.

The internet access module 104 is arranged to operate on a first type of channel, which is called an IP channel (and is not a cellular network channel), whereas the cellular access module 103 is arranged to operate on a second type of channel, which is called a cellular channel. Both channels can be operated based on IP. The cellular network can be e.g. any second generation (2G) network, such as a GSM, or third generation (3G) network, such as a universal mobile telecommunications system (UMTS), or any future cellular network. Understood here by a cellular network is a radio network made up of a number of radio cells each served by at least one fixed-location transceiver known as a cell site or base station. These cells cover different areas to provide radio coverage over a wider area than the area of one cell, so that a variable number of portable transceivers can be used in any one cell and moved through more than one cell during transmission (handover procedure). Roaming agreements may stipulate how the data and signalling should flow between an end user and a home operator network when roaming.

If the laptop 101 uses a wireless internet access, then the related router or set-top box is also equipped with a new hardware module or card. In this case the card would be an IP-Ethernet/cellular network card with embedded software.

In Figure 1 there are further shown four network elements located in the homeland N₁, namely a gateway (GW) 105, a first data server (S₁) 109₁, a second data server (S₂) 109₂ and a GGSN 111. The servers 109 in the homeland network can be any entities offering a service or content to end users. The first and second servers 109 together are the content provider (CP). In this example the gateway 105 is managed by a local internet service provider, and is an interface between the homeland network, the cellular network and external networks, such as N₂. The first server 109₁ and/or the second server 109₂ can be hosted by the network operator.

The GGSN 111 is arranged to communicate with the gateway 105. The GGSN is a main component of a general packet radio service (GPRS) network, which is an example of a cellular communication network. The GGSN is responsible, either alone or together with other network elements, for the interworking between the GPRS network and external packet switched networks, like the internet.

From an external network's point of view, the GGSN is a router to a subnetwork, because the GGSN hides the GPRS infrastructure from the external network. The GGSN is the anchor point that enables the mobility of the user terminals in the GPRS/UMTS networks. In essence, it carries out the role in GPRS equivalent to the home agent in Mobile IP. The GGSN is also responsible for IP address assignment, and is the default router for the connected user equipment (UE).

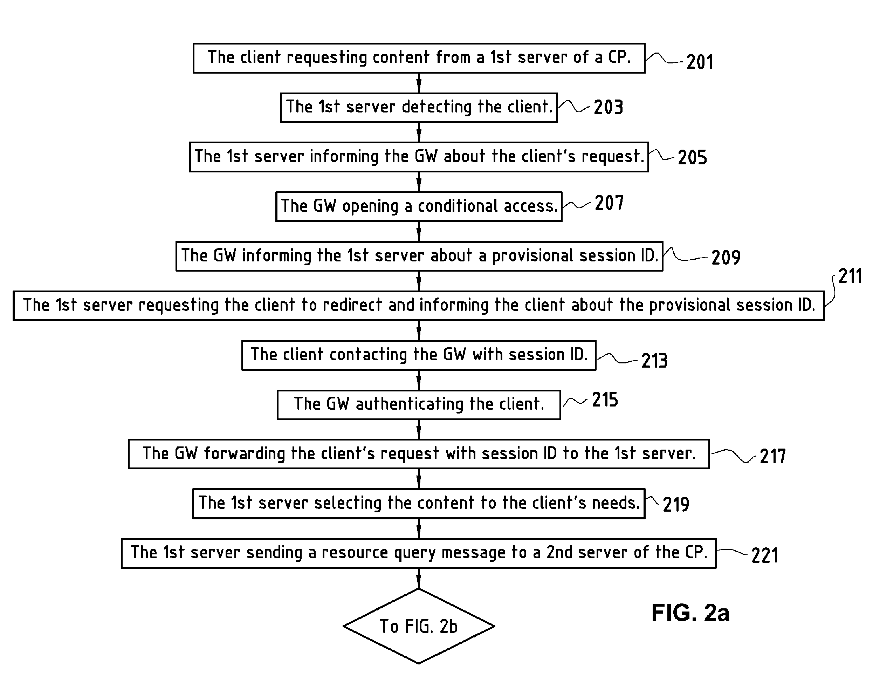

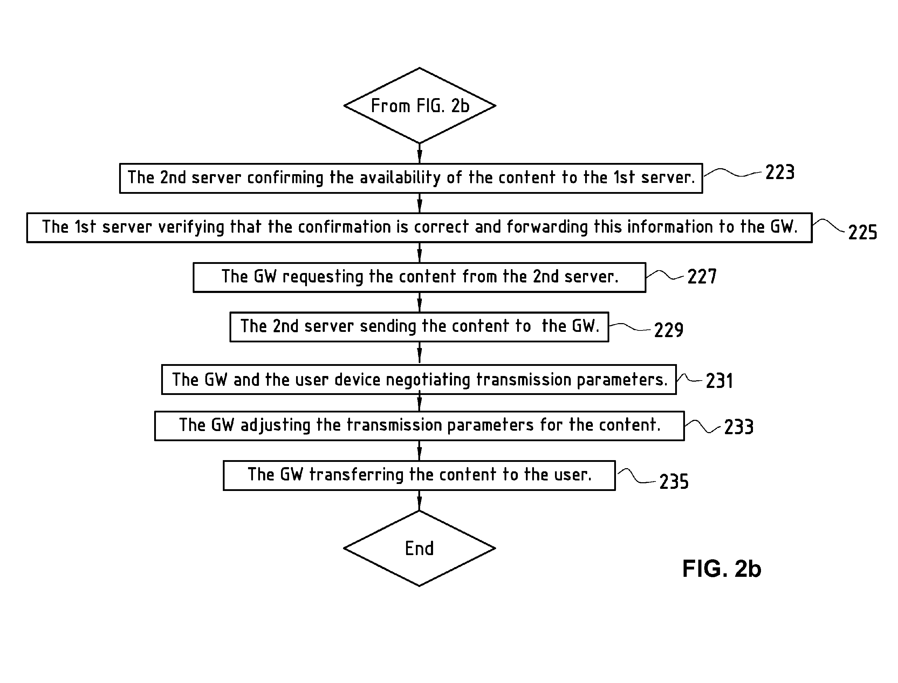

Next by referring to the flow chart of Figures 2a and 2b, the data access method in accordance with the first embodiment of the present invention is described. In the illustrated example the network operator and the CP are in close partnership. This means that the network operator operates a server farm for a third party content provider. The requested content is located on the CP servers which are hosted or not by the network operator. In the closed partnership, the CDN is common to the operator and to the CP, i.e. the CDN is shared between the operator and the CP. Furthermore, the CP is provided with application programming interfaces (APIs). An API is a particular set of rules and specifications that a software program can follow to access and make use of the services and resources provided by another particular software program that implements that API. Thus, it serves as an interface between different software programs, and facilitates their interaction. In the example described below, the operator provides the APIs for the CP to manage its content.

In this specific example the user is roaming in the second network N₂ and would like to access data stored on the servers 109 of the CP. First in step 201, by using the cellular access module 103 of the hardware card 102 of the laptop 101, the user requests a service or content directly (without passing through the gateway 105) from the first server 109₁. Thus, this request is made by using the cellular channel, to access the desired service, such as streaming or progressive download, that the CP offers. Next in step 203 the first server 109₁ detects, e.g. based on the IP address of the user, that the user most likely is a client of a certain network operator. Also in this step the first server 109₁ determines that it does not have the content requested by the user. The first server 109₁ also detects that the user is not located in the homeland network N₁.

Next in step 205 the first server 109₁ informs the gateway 105 of the relevant cellular network operator about the user's request received in step 203. In step 207 the gateway 105 opens a conditional access. In other words, the gateway 105 opens a ticket, and waits for a specified event defined in the ticket to come. Provisional session identifier (ID) would be the generic name associated with this ticket number. If the content is not known by the first server 109₁, then in this step the gateway 105 also determines which server contains the content requested by the user. In this case the first server 109₁ would make the gateway 105 part of the CDN. However, in the present example the first server 109₁ and the second server 109₂ are part of the same CDN, and in this case the location information of the content is shared among them. The network operator has communicated this information to the servers. It is also possible that the same content is located on several servers.

After this, in step 209 the gateway 105 informs the first server 109₁ about the provisional session ID. Also, if necessary, the gateway 105 tells the first server 109₁ to which server the user's request should be redirected. In the present example it is the second server 109₂ that contains the content requested by the user. The first server 109₁ can also be informed about the port number of the new server (109₂) to be connected.

In step 211 the first server 109₁ informs the hardware card 102 that the user's initial request has to be redirected. This redirection request can contain information about where the content is located, i.e. in this example the second server 109₂. This information is sent on the IP channel. The user does not have to know about the redirection request. The software running on the hardware card 102 can take care of the steps that follow. The redirection request is sent from the first server 109₁ directly to the hardware card 102 without passing through the gateway 105. The redirection command is in this example a hypertext transfer protocol (HTTP) redirection request including a status code. In this step the first server 109₁ informs the hardware card 102 also about the provisional session ID. The redirection message can be simply a link indicating for instance an address to be contacted by the hardware card 102.

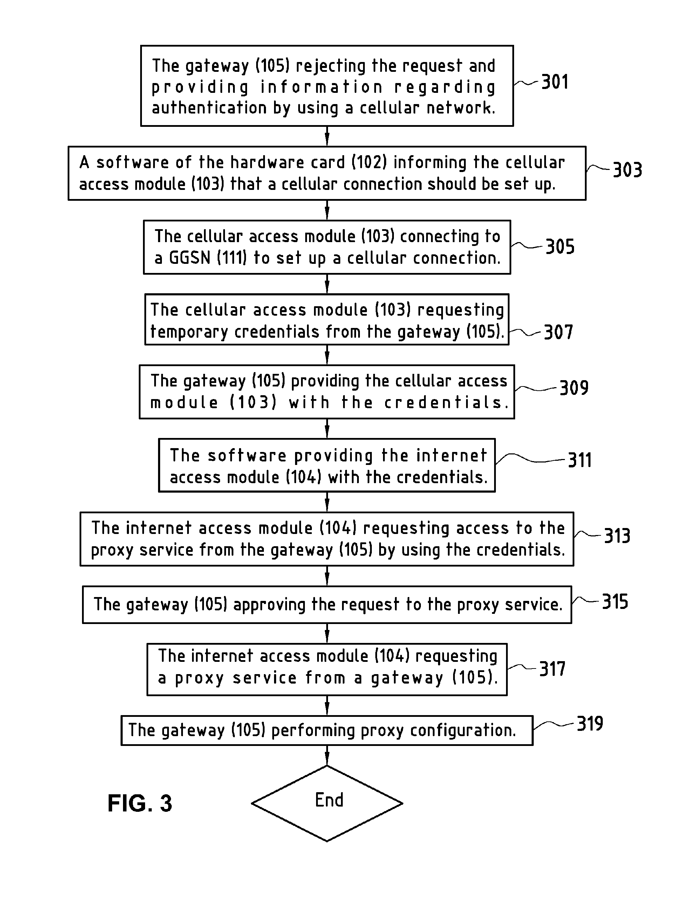

Next in step 213 the cellular access module 103 or the internet access module 104 of the hardware card 102 contacts the gateway 105, and provides the gateway 105 with a session ID. In other words the hardware card 102 requests a proxy service from the gateway 105. Now the hardware card uses the session ID instead of the provisional session ID, but the IDs here are the same. If the gateway 105 detects that for this user the provisional session ID and the session ID do not match, then the access is denied. The hardware card 102 either knows to which gateway 105 it should connect or this information is received from the first server 109₁. In step 215 the gateway 105 authenticates the user of the hardware card 102. The authentication procedure is described in more detail in the flow chart of Figure 3. The authentication is done by using the cellular channel. Once the access is granted, the cellular channel, if used until now, can be changed to the IP channel in order to achieve a higher data speed when accessing the requested content (e.g. HTTP streaming).

Once the user is authenticated, then in step 217 the gateway 105 forwards the user's request together with the session ID to the first server 109₁. The gateway 105 can also give a unique user identifier to the user. This unique identifier is preferably anonymous to third parties, and is tied to the user or the mobile subscriber ISDN (MSISDN) number. As the operator does not reveal the full identity of its customers, it can however communicate, under or with the anonymous unique identifier, some useful information (e.g. profiling information) about this customer to the CP. It is up to the CP to use it, to better personalise the content. The profiling information may contain e.g. the location of the information of the user. This can be useful when the user is travelling so that he can receive (as will be explained later) useful information on the travel destination. The profiling information can also contain information on the user's hobbies so that he can then receive information related to his hobbies.

The user identifier of one particular user is preferably different for different CPs, but for one specific CP the user's identifier can remain the same. There can be one algorithm used for creating the user identifiers, and for different CPs different parameters can be used when running this algorithm so that different IDs can be obtained for these different CPs. Thus, the session ID and the profiling information and possible the unique user identifier make it possible to personalise the content to the user as will be explained later in more detail. So in step 217 the session ID and the profiling information and possibly also the anonymous user identifier are sent to the first server 109₁. It is to be noted that in some implementations, no user identifier is sent to the server. In this case the profiling information would be tied to the session ID and sent to the server.

In response to the user's request, the first server 109₁ adjusts in step 219 the content to the user's needs, i.e. the content is personalised based on the profiling information and the session ID and also possibly based the user identifier. As mentioned above, information related to the user's hobbies, location or preferences can be sent to the first 109₁ to be taken into account for personalising the content. Thus, targeted advertising can be done. The content personalising can also include choosing the right content from the second server 109₂, for instance choosing the desired language version of a film. Thus, the first server 109₁ can change language settings of the content to correspond to the user's wishes. In step 221 the first server 109₁ sends a resource query message to the second server 109₂ (part of the CDN) about the availability of the resources. In step 223 the second server 109₂ sends a confirmation message to the first server 109₁ that the resource query sent in step 221 can be fulfilled. Also in this step the second server 109₂ sends to the first server 109₁ a description how the content can be accessed. In step 225 the first server 109₁ verifies that the information is correct and forwards this information to the gateway 105. Then in step 227 the gateway 105 requests the content from the second server 109₂. In step 229 the second server 109₂ sends the personalised content (defined by the first server 109₁) to the gateway 105.

In step 231 the gateway 105 and the laptop 101 negotiate transmission parameters. In step 233 the gateway 105 adjusts the transmission parameters to the user's needs. The content format is controlled by the gateway 105, which is responsible for the quality of service (QoS). For example, in case of adaptive streaming, the gateway 105 selects the right packet format according to the available bandwidth or the size of the screen that is being played. Adjusting the QoS by the gateway 105 can include for example choosing an optimal transcoding scheme. Also, if it is known that the user device 101 is not able to deal with high quality content, then the gateway 105 can decrease the quality of the fetched content so that this content can be properly viewed or used by the user. Moreover, content rendering can also be done by the gateway 105. It is to be noted that the procedure of adjusting the transmission parameters can be a continuous process, e.g. in case of adaptive streaming. Finally in step 235 the gateway 105 transfers the content to the laptop 101 by using the chosen data transfer technology. Thus, the proposed data access method offers a better user experience than the traditional access methods. In the case where the content is streaming data, the proposed method offers adaptive streaming to the user.

The flow chart of Figure 3 illustrates the authentication procedure done in step 215. In response to the proxy service request received in step 213, the gateway 105 rejects in step 301 the user request as the gateway 105 cannot authenticate the user as the user request is unknown. When rejecting the request, the gateway 105 also informs the hardware card 102 about what it should do next. The gateway 105 informs the hardware card 102 to authenticate itself through a specific realm, which can be a specific cellular network operator. The gateway 105 may also give a specific access point name (APN), which can be e.g. a specific cellular network operator proxy service. It is also possible for the gateway 105 to give to the hardware card 102 an internal universal resource locator (URL) of the gateway 105 or an internal IP address of the gateway 105, so that cellular network modules are able to find the gateway 105.

In some cases a cellular network connection is already set up by the cellular access module 103. This would be beneficial as the delay in setting up the cellular network connection can be avoided at this stage of the procedure. However, if the cellular connection is not yet running, then in step 303 the software of the hardware card 102 informs the cellular access module to set up the cellular network connection. A cellular communication channel, such as a GSM or 3G channel, is then established in step 305 by the cellular access module between the laptop 101 and the GGSN 111. The cellular connection is set up as is known in the art, and is thus not described in more detail in this context. The GSM/3G channel plays the role of a mobile channel authenticator. In this example, this channel is a signalling channel, and is thus only used for transferring sensitive data or information. As a result of setting up the cellular connection, the GGSN 111 allows a relatively secure and proven cellular connection.

In order for a roaming user to access restricted services on the second server 109₂, the authentication and authorisation are established on the GSM/3G channel first. Once the GSM/3G channel is opened, security information, such as cookies, password, port address, VPN parameters, token IDs, local IP address for IP tunnelling (home address in a mobile IP context), etc., can be transmitted to be reused for accessing the service on a less secure IP channel such as WiFi. The GSM/3G channel is considered as secure enough to protect the data used for accessing a geoblocked service. Some cross channel authentication methods can also be implemented to reinforce the security.

In step 307, the cellular access module 103 requests temporary credentials, such as identity information and password, from the gateway 105 in order to gain access to the proxy service. In step 309, the gateway 105 responds to the cellular access module by providing the requested credentials.

Once the credentials have been received by the hardware card 102, these credentials are transferred (if the IP channel is used to access the content) in step 311 to the internet access module 104 by the software of the hardware card 102. In order to enhance security, the temporary credentials sent to cellular access module 103 and transferred to internet access module 104 are not read by the operating system running on the network access device 101. Then in step 313 the internet access module 104 requests access to the proxy service from the gateway 105 by using the digest authentication procedure. The digest access authentication is one of the agreed methods a web server can use to negotiate credentials with a web user. The procedure is based on HTTP. This procedure allows user identity to be established securely without having to send a password in plaintext over the network. In step 315, the gateway 105 authenticates the user and approves the request.

Once the user request is approved, then in step 317 the internet access module 104 requests the proxy service from the gateway 105. In response to the received request, the gateway 105 performs proxy configuration in step 319. In this example, which relies on HTTP, the proxy configuration means that the gateway 105 matches an entry IP address (at the gateway 105) to an outgoing IP address (at the gateway 105), chosen from a pool of local IP addresses within a specific country, and the gateway 105 then gives the right IP entry address and possibly a port number of the gateway 105 to the internet access module 104. After this the procedure continues in step 217. Eventually, based on this information, the internet access module 104 can access the desired original content or service on the second server 109₂ through the gateway 105 since the user of the laptop 101 is now seen by the second server 109₂ as a user of the network N₁.

If in step 213 the user contacts the gateway 105 on the cellular channel, then the flow chart of Figure 3 becomes simpler, namely the steps 303, 305 and 311 are not needed. Also, in steps 313 and 317 the internet access module 104 is replaced with the cellular access module 103.

When accessing the service provided by the second server 109₂, the hardware card 102 communicates with the gateway 105 (by using automated tunnelling techniques on the user and the gateway sides or automated proxying techniques on the user and the gateway sides) which, in turn, communicates with the correct server 109₂, so that the user of the laptop 101 can access the data on the second server 109₂. The requested information is then transferred to the gateway 105, which further forwards the information directly to the user on the IP channel, for instance. This so-called IP channel is a non-trusted channel such as WiFi, Ethernet-based, or similar. It is used as the bearer where user data will flow.

A simplified illustration of the closed partnership scenario of the present invention was described above. In this scenario, the content can be split between the operator and the CP. For instance, the operator servers contain first type of content (e.g. content on demand), whereas the CP servers contain second type of content (e.g. real time content). Many variants in the illustrated example are possible. In one variant there is a loose partnership between the network operator and the CP. In the loose partnership, replicated content exists on the operator side, and the CP knows the link to that content. The replicated content is ready to be distributed to end users.

Furthermore, there can be a timer running on the gateway 105 that measures the time between two consecutive messages received from the internet access module 104 during the connection set-up procedure. If the measured time period exceeds a certain threshold (e.g. a couple of minutes), the gateway 105 can disconnect the hardware card 102 from the gateway 105. In this case the hardware card may have to start the whole access request procedure from the beginning. Alternatively, there can be a "ticket" valid for a certain time period (e.g. 20 minutes) given to the user. The service is then shut down for this user after the expiration of this time period. The time can be set to run from the first communication received from the user by the gateway 105. It is also possible for the user to ask before the expiration of the time period for a new ticket to prolong the service period.

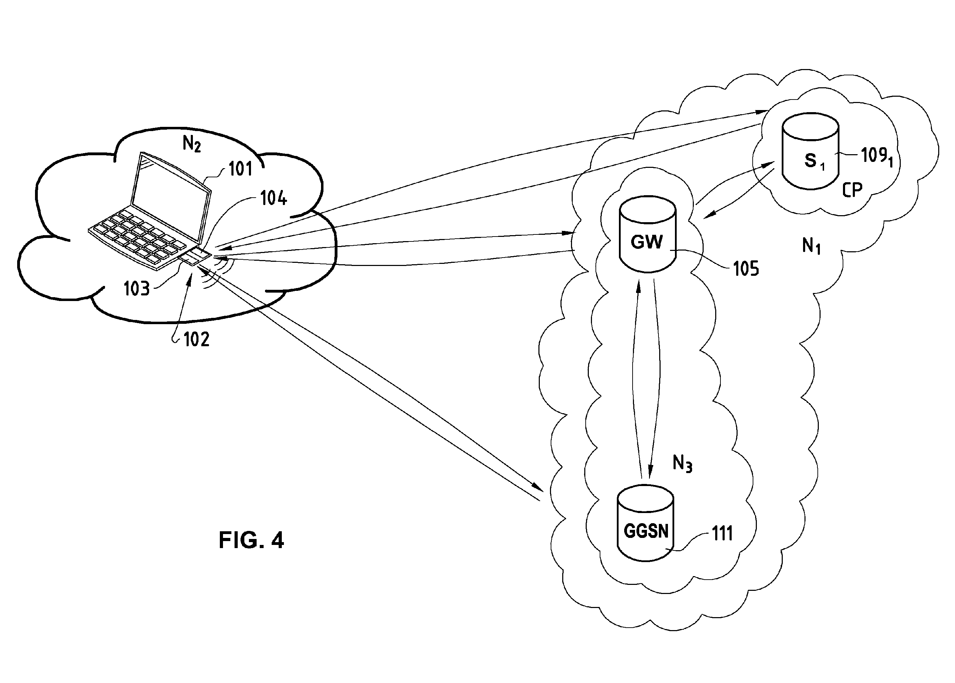

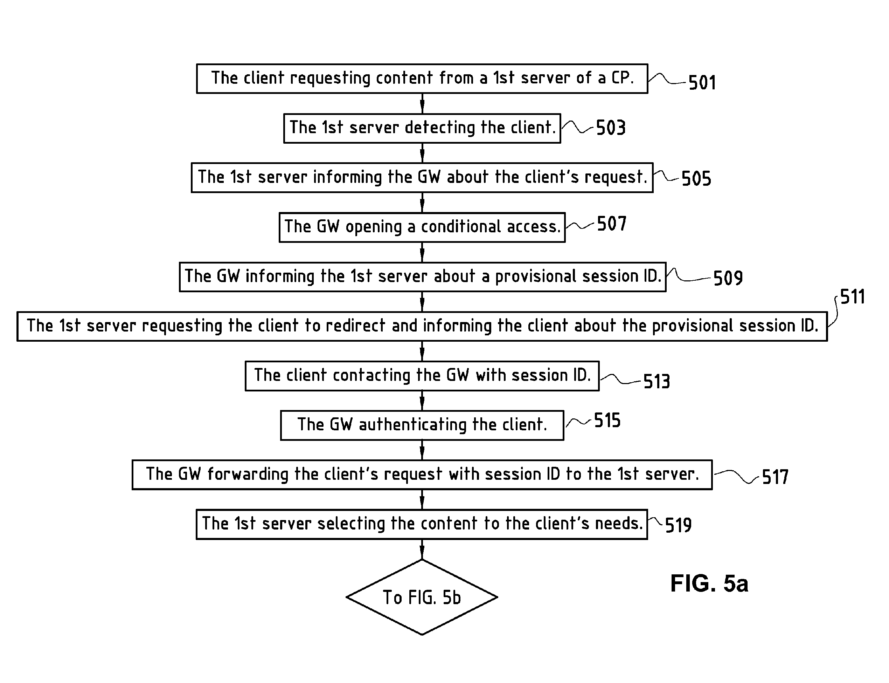

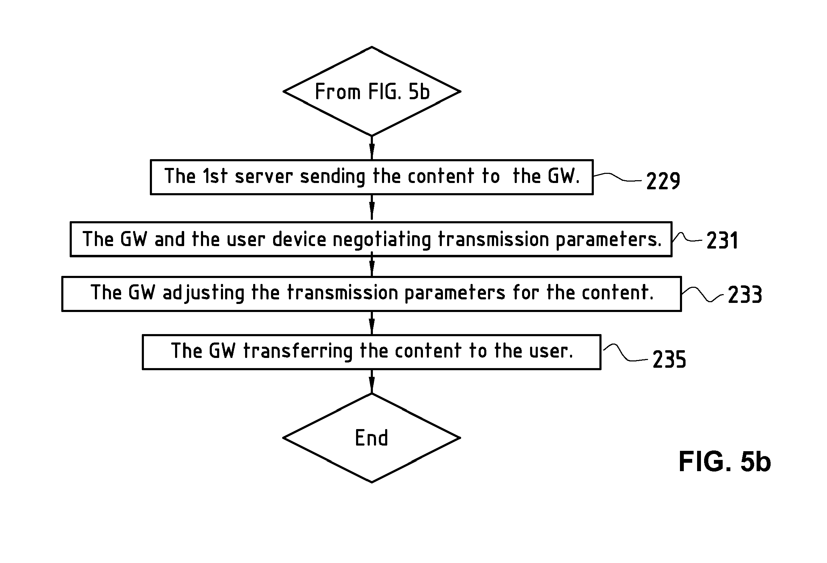

Figure 4 illustrates the communication system where the teachings of the second embodiment of the present invention can be applied. In this embodiment the CP contains only one server, namely the first server 109₁. Thus, a CDN network is not needed. The flow chart of Figures 5a and 5b explains how the user can access the content on the server 109₁ according to this embodiment. It can be noticed that the steps 201-219 correspond to steps 501-519, and the steps 231, 233 and 235 correspond to steps 523, 525 and 527, respectively. Also the steps 221, 223, 225 and 227 are not needed in the flow chart of the second embodiment. Furthermore, in step 521 it is the first server that sends the content to the gateway 105.

In short and as described above, cellular access, i.e. mobile access as token (Secure ID token), can be used for authentication and authorising IP proxying, VPN, or IP tunnelling techniques for accessing internet/intranet IP operator services, for instance. These services can be granted by the homeland operator. The proposed solution can be used by any user having any IP connectivity combined with cellular network connectivity. However, it is to be noted that for implementing the proposed solution, an IP channel is not necessarily needed, but the user device can communicate only by using the cellular channel. The teachings of the present invention can be equally applied to access VPNs. A unique benefit is to avoid the use of extensible authentication protocol (EAP) subscriber identity modules (SIMs) in the customer devices, thereby offering better global security, since the international mobile subscriber identity (IMSI) is not revealed (on the IP channel).

When used to overcome geoblocking, the proposed solution enables, operators to allow their customers to connect to services anywhere in the world as if they were in their homeland. The customers just need to buy a kit, including a special card and an SIM (linked to the operator), which could then just be used for internet purposes all over the world. The solution has the advantage of ease of use/access, thereby improving customer satisfaction.

While the invention has been illustrated and described in detail in the drawings and foregoing description, such illustration and description are to be considered illustrative or exemplary and not restrictive, the invention being not limited to the disclosed embodiments. Other embodiments and variants are understood, and can be achieved by those skilled in the art when carrying out the claimed invention, based on a study of the drawings, the disclosure and the appended claims. In particular the gateway 105 can be physically at the same location where the CP is. Furthermore, some signalling data can be transmitted on the IP channel in combination with that transmitted over the cellular channel, with the purpose of reinforcing security and adding flexibility and scalability in the global implementation of the solution. Also the user identifier does not necessary have to be anonym, but it can be simply the MSISDN number. It is also possible that the content received on the network access device 101 can be transferred to a local device to displayed or used.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method for a content provider to deliver content in a communication network, the method comprising:
• the content provider (109₁) receiving (201, 501) a first content access request from a user;
• the content provider (109₁) determining (203, 503) which operator gateway (105) it should contact;
• the content provider (109₁) informing (205, 505) the operator gateway (105) about the user's request;
• the content provider (109₁) receiving (209, 509) a message comprising a provisional session identifier from the operator gateway (105);
• the content provider (109₁) sending (211, 511) a redirection request comprising the provisional session identifier to the user;
• the content provider (109₁) receiving (217, 517) a second content access request containing at least profiling information and a session identifier corresponding to the provisional session identifier; and
• the content provider (109₁, 109₂) delivering (229, 235, 521, 527) the content through the gateway (105) to the user,
wherein the content is personalised (219, 519) based on at least the profiling information and the session identifier before the content is delivered to the user.

2. A method according to claim 1, wherein the first and the second content access requests are received by a first server (109₁), which is arranged to personalise the content.

3. A method according to claim 2, wherein the content is located on a second server (109₂) and the method further comprises the first server (109₁) interrogating (221) the second server (109₂) about the content, the first server (109₁) receiving (223) a confirmation together with information about the location of the content from the second server (109₂), and the first server (109₁) forwarding (225) this information to the gateway (105) which requests (227) the content from the second server (109₂).

4. A method according to any one of the preceding claims, wherein the content provider (109₁) when determining which operator gateway (105) it should contact detects an internet protocol address of a user device (101) and/or detects a network operator of the user.

5. A method according to any one of the preceding claims, wherein the redirection request sent by the content provider (109₁) is a hypertext transfer protocol redirection message.

6. A method according to any one of the preceding claims, wherein the method further comprises the gateway (105) receiving (213, 513) from a user device (101) the second content access request containing the session identifier corresponding to the provisional session identifier for the user's request.

7. A method according to any one of the preceding claims, wherein the second content access request further comprises a unique user identifier directly or indirectly tied to the user and wherein the content is further personalised based on the unique user identifier.

8. A method according to any one of the preceding claims, wherein the method further comprises, after the gateway (105) has been informed about the user's request, the gateway (105) opening (207, 507) a conditional access and giving a provisional session identifier for the user's request.

9. A method according to any one of the preceding claims, wherein the method further comprises the gateway (105) authenticating (215) the user before sending the second content access request to the content provider (109₁).

10. A method according to claim 9, wherein the authentication is done by using a cellular communication network connection.

11. A method according to any one of the preceding claims, wherein the method comprises, before delivering the content to the user, the gateway (105) negotiating (231, 523) transmission parameters with a user device (101) and then the gateway (105), before delivering the content to the user, adjusts (233, 525) the transmission parameters.

12. A method according to claim 11, wherein the adjustment comprises at least one of the following: choosing an optimal data transfer technology, adjusting the quality of service to the user's needs and rendering the content.

13. A method according to any one of the preceding claims, wherein the content is personalised by the content provider (109₁).

14. A method according to claim 13, wherein the content personalisation comprises at least one of the following: selecting a file version that suits user's needs, providing targeted advertising and providing information related to user's hobbies or preferences.

15. A computer program product comprising instructions for implementing the steps of a method according to any one of claims 1 to 7 or 13-14 when loaded and run on computer means of the content provider (109).

16. A server system (109₁,109₂) for a communication network, wherein the server system (109₁, 109₂) comprising means for:
• receiving a user content access request;
• determining which operator gateway (105) it should contact;
• delivering information about the first user content access request;
• receiving an operator gateway message containing a provisional user identifier;
• sending a redirection request;
• receiving another user content access request containing at least profiling information and a session identifier corresponding to the provisional session identifier;
• personalising the content based on at least the profiling information and the session identifier; and
• delivering the content requested by the user.

17. A communication network comprising the server system according to claim 16 and a gateway (105) comprising means for:
• receiving from the server system (109₁, 109₂) the content requested by the user;
• adapting transmission characteristics for the content; and
• forwarding the content to the user by using the adapted transmission characteristics.
